# EUROPEAN PATENT APPLICATION

(11) **EP 4 790 779 A1**
(43) Date of publication of application: **12.08.2026**
(21) Application number: 25867173.4
(22) Date of filing: 16.10.2025
(51) Int. Cl.: H01M 10/04, H01M 50/256, B65G 47/90, B65G 49/05

(54) **GRIP DEVICE**

(30) Priority: 17.12.2024 KR 20240188530
(71) Applicant: LG ENERGY SOLUTION, LTD., Seoul 07335 (KR)
(72) Inventor: KIM, Tae Min, Yuseong-gu, Daejeon 34122 (KR); HA, Jae Sung, Yuseong-gu, Daejeon 34122 (KR); KIM, Ki Hyeon, Yuseong-gu, Daejeon 34122 (KR)
(74) Representative: Goddar, Heinz J.
(86) International application number: PCT/KR2025/016384
(87) International publication number: WO 2026/134582

(57) **Abstract**

The present disclosure relates to a grip device. The grip device according to an aspect of the present disclosure is capable of picking up or placing a cylindrical secondary battery, comprising a gripper comprising a pad and a frame supporting the pad; and an actuator configured to move the gripper in one direction, wherein the pad comprises a pad part comprising a grip surface capable of contacting the outer circumferential part of the cylindrical secondary battery and a coupling part provided on one side of the pad part and coupled to the frame in a shape fitting manner.

## Description

### TECHNICAL FIELD

### CROSS-REFERENCE TO RELATED APPLICATIONS

This application claims priority from Korean Patent Application No. 12-2024-0188530, filed on December 17, 2024, the disclosure of which is incorporated herein in its entirety by reference.

### TECHNICAL FIELD

The present disclosure relates to a grip device, and more specifically, to a grip device for picking up or placing a cylindrical secondary battery.

### BACKGROUND ART

Secondary batteries have been applied to small fields such as mobile devices and laptop computers, but in recent years, research directions have been expanded to large fields, and such batteries are widely used in fields requiring high voltage and large capacity such as energy storage systems ESS) or Electric Vehicle: EV). The secondary battery may comprise an electrode assembly in which a positive electrode, a separator (or all-solid state), and a negative electrode are sequentially stacked, and a case accommodating the same. Here, the secondary battery may be classified into a cylindrical type, a pouch type, or a prismatic type secondary battery according to the type or structure of the case. Among them, a cylindrical secondary battery case is formed of a can-shaped structure.

Such cylindrical type secondary battery may be picked up by a predetermined grip device or placed at one position in a manufacturing or transfer process. A conventional grip device is configured with a pair of frames that are spaced apart from or close to each other, and is configured to pick up or place the secondary battery disposed therebetween. However, the grip device may stably pick up or place only a secondary battery having a preset size. In order to pick up a secondary battery of another size, a problem exists in that the existing entire frame must be replaced with a frame of another size or shape. In addition, since the frame of a conventional grip device is easily bent or deformed in repeated work processes, a problem arises in that the secondary battery cannot be stably picked up. In order to solve the deformation problem, when the material of the frame is replaced with a metal having high rigidity, another problem arises in that damage such as scratches occurs in the secondary battery during the gripping process. Accordingly, there is an urgent need to develop a grip device capable of stably picking up or placing cylindrical secondary batteries of various sizes without damage.

### DISCLOSURE

### Technical Problem

To address the above problems, an object of the present disclosure is to provide a grip device capable of stably picking up or placing secondary batteries of various sizes without damage.

The objects of the present disclosure are not limited to the above-mentioned objects, and other objects not mentioned will be clearly understood by those skilled in the art to which the present disclosure pertains from the following description.

### TECHNICAL SOLUTION

According to an aspect of the present disclosure, there is provided a grip device capable of picking up or placing a cylindrical secondary battery, comprising: a gripper comprising a pad and a frame supporting the pad; and an actuator configured to move the gripper in one direction, wherein the pad comprises: a pad part comprising a grip surface capable of contacting the outer circumferential part of the cylindrical secondary battery; and a coupling part provided on one side of the pad part and coupled to the frame in a shape fitting manner.

Here, the gripper may be provided in a pair, and the pair of grippers may be arranged to face each other in a direction parallel to the one direction.

Here, the frame may be formed of a material having greater rigidity than the pad.

Here, the frame material may include metals, and the pad material may include plastics.

Here, the frame may extend in a direction perpendicular to the one direction, the pad may be disposed adjacent to an end portion of the frame, and the grip surface of the pad part may face the one direction.

Here, the gripper may further include a coupling member, a coupling hole may be provided in the coupling part, a corresponding coupling hole connected to the coupling hole may be provided in the frame, and the coupling member may be coupled to the coupling hole and the corresponding coupling hole.

Here, the coupling hole and the corresponding coupling hole may be provided in plurality.

Here, the frame may extend in a direction perpendicular to the one direction, and the plurality of coupling holes and the corresponding coupling holes may be arranged in a direction parallel to the one direction.

Here, the coupling part may protrude outward from the pad part, and the frame may include a frame part provided with coupling space into which the coupling part is inserted.

Here, the coupling space may have a shape corresponding to the coupling part so that the coupling part and the frame part can be coupled in a shape fit manner.

Here, the coupling space may be opened in the one direction, and the coupling part may protrude from the pad part in a direction opposite to the one direction.

Here, the frame part may extend in a direction perpendicular to the one direction, and one side of the coupling space may be opened. The other side facing the one side may be blocked by the inner wall of the frame part based on the longitudinal direction of the frame part.

Here, the frame may include a side cover part surrounding a side portion of the pad part.

Here, the side cover part may be provided in a pair, and the pair of side cover parts may be arranged side by side with the coupling space therebetween.

Here, the side cover part may be coupled to the side portion in a shape-fitting manner.

Here, the pad part may include a rear surface facing the grip surface and a side surface provided between the grip surface and the rear surface, and the side cover part may include a rear surface cover part configured to cover at least a portion of the rear surface and a side cover portion extending from the rear surface cover part to cover at least a portion of the side surface.

Here, the side cover part may have a length greater than or equal to the pad part based on the longitudinal direction.

Here, the coupling part may be provided on the rear surface.

### ADVANTAGEOUS EFFECTS

According to an aspect of the present disclosure, since the pad is provided with the coupling part that can be coupled to the frame in a shape-fitting manner, the pad and the frame, which are formed of different materials, may be stably coupled to each other through a simple structure.

Accordingly, the frame may be formed of a material having higher rigidity than the pad that is in direct contact with the secondary battery, thereby stably picking up or placing secondary batteries of various sizes and outer shapes. Particularly, since the existing pad may be easily replaced with a pad of another shape or size, the secondary battery may more actively accommodate changes in its size or external shape.

In addition, the bending or deformation of the frame part may be minimized in the repeated gripping processes, which enables the secondary battery to be stably picked up, and minimizes damage to the secondary battery caused by the pad.

The effects of the present disclosure are not limited to the above-described effects, and other unmentioned effects will be clearly understood by those skilled in the art from the present specification and the accompanying drawings.

### BRIEF DESCRIPTION OF THE DRAWINGS

FIG. 1 is a view schematically illustrating a process of picking up or placing the cylindrical secondary battery by the grip device according to an embodiment of the present disclosure.
FIG. 2 is a perspective view illustrating the gripper of the grip device facing the side portion of the cylindrical secondary battery when viewed from above according to an embodiment of the present disclosure.
FIG. 3 is an exploded perspective view of the gripper of the grip device according to an embodiment of the present disclosure.
FIG. 4 is a cross-sectional view according to I-I of FIG. 2.
FIG. 5 is a front view of the frame of the gripper illustrated in FIG. 2.

### BEST MODE

Preferred embodiments of the present disclosure will be described in detail so that those skilled in the art can easily carry out the invention. However, the present disclosure may be embodied in many different forms and is not limited to the embodiments described herein.

To clearly describe the present disclosure, detailed descriptions of related known technologies that may unnecessarily obscure the gist of the present disclosure will be omitted. In the present specification, when reference numerals are added to components in each drawing, the same or similar reference numerals are assigned to the same or similar components throughout the specification.

It will be understood that terms or words used in the present disclosure and claims shall not be construed as being limited to having meanings defined in commonly used dictionaries, but should be interpreted as having meanings and concepts consistent with the technical idea of the present disclosure based on the principle that an inventor may appropriately define concepts of the terms to best explain the invention.

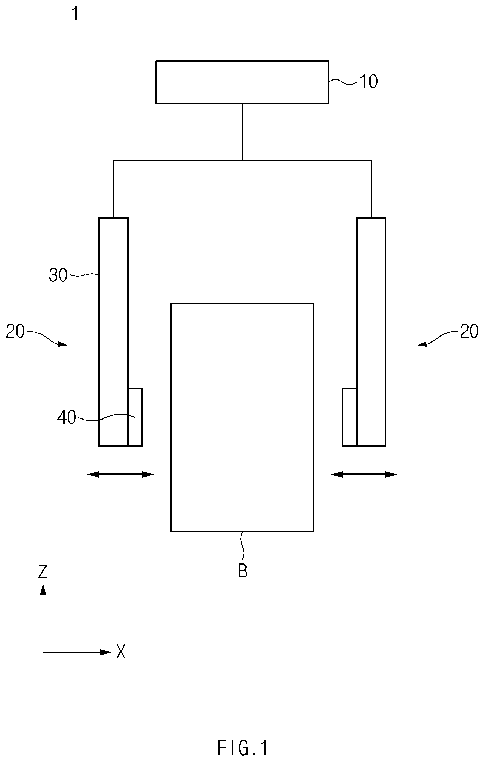

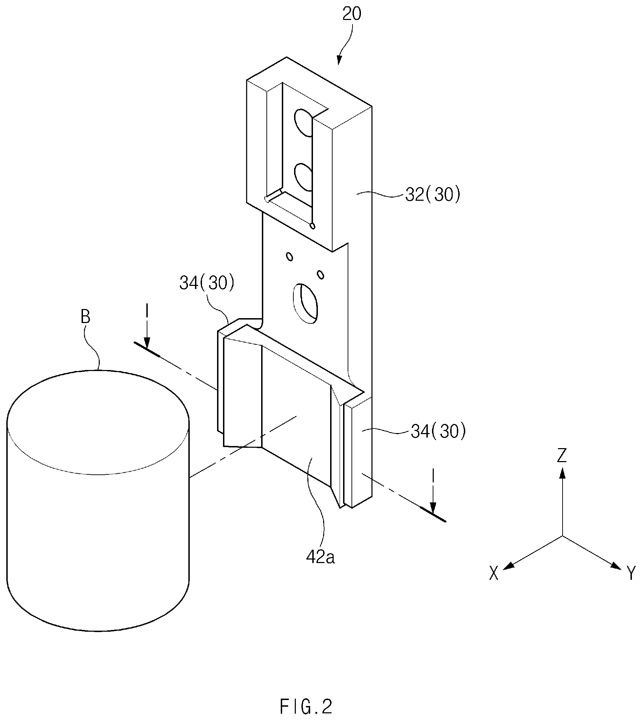

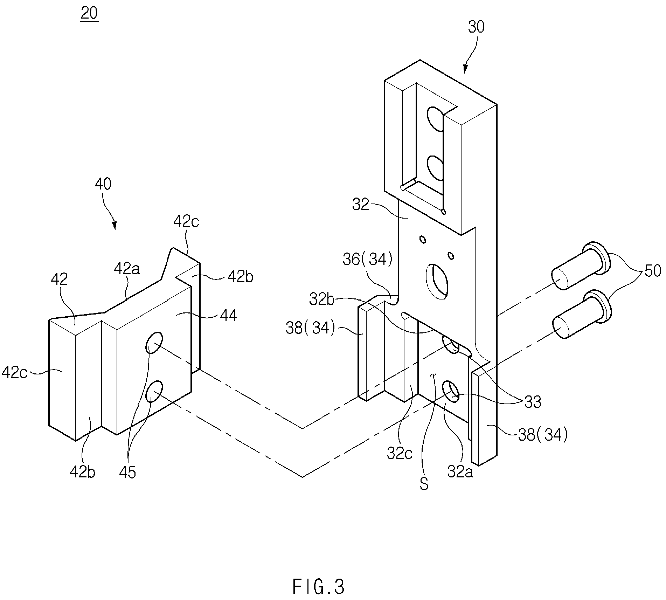

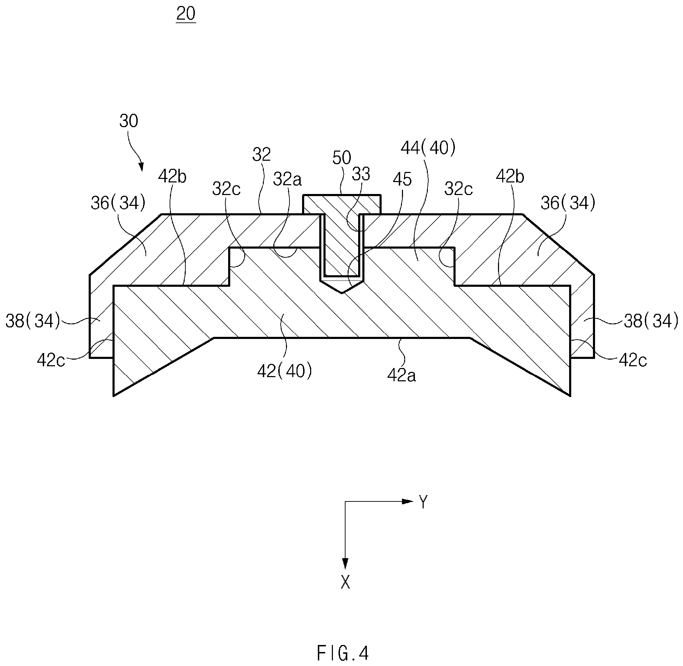

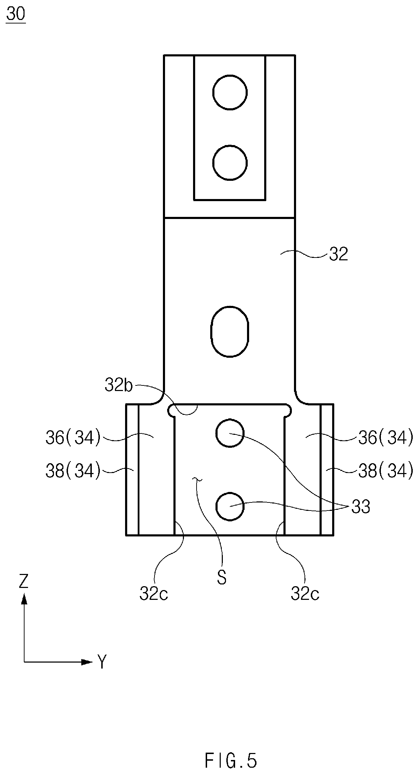

FIG. 1 is a view schematically illustrating a process of picking up or placing the cylindrical secondary battery by the grip device according to an embodiment of the present disclosure. FIG. 2 is a perspective view illustrating the gripper of the grip device facing the side portion of the cylindrical secondary battery when viewed from above according to an embodiment of the present disclosure. FIG. 3 is an exploded perspective view of the gripper of the grip device according to an embodiment of the present disclosure. FIG. 4 is a cross-sectional view according to I-I of FIG. 2. FIG. 5 is a front view of the frame of the gripper illustrated in FIG. 2.

FIG. 1 to FIG. 5 illustrate the grip device according to an embodiment of the present disclosure. Referring to FIG. 1, the grip device (1) according to an embodiment of the present disclosure may be a device for stably picking up or placing cylindrical secondary batteries (B) of various sizes or shapes without damage.

In the present embodiment, the grip device (1) may include an actuator (10). The actuator (10) may be configured to provide a driving force for operating the gripper (20), which will be described later. A gripping force for picking up the secondary battery (B) may be generated by the actuator (10).

In this embodiment, the actuator (10) may include a hydraulic cylinder, an electric motor, or the like, but the structure or type of the actuator (10) is not particularly limited as long as it can provide a driving force and a gripping force for operating the gripper (20).

Referring to FIGS. 1 and 2, the grip device (1) according to an embodiment of the present disclosure may include the gripper (20). The gripper (20) may be configured to directly pick up or place the secondary battery (B). The gripper (20) may be operatively connected to the actuator (10).

In the present embodiment, the gripper (20) may be provided in a pair. The pair of grippers (20) may be arranged along the front-rear direction (X-axis direction). The gripper (20) may be configured to move in the front-rear direction (X-axis direction) by the actuator (10).

As illustrated, the secondary battery (B) may be disposed between the pair of grippers (20). As the pair of grippers (20) move in a direction closer to each other, the grip device (1) may pick up the secondary battery (B). As the pair of grippers (20) move in a direction away from each other, the grip device (1) may place the secondary battery (B).

Hereinafter, the gripper (20) of the grip device (1) according to an embodiment of the present disclosure will be described in more detail. The description will be made with reference to the gripper (20) positioned relatively rearward (negative X-axis direction) among the pair of grippers (20).

Referring to FIGS. 2 and 5, the gripper (20) of the grip device (1) according to an embodiment of the present disclosure may include the frame (30). The frame (30) may be configured to support a pad (40) to be described later. The gripping force generated by the actuator may be transmitted to the pad (40) through the frame (30).

Here, in the present embodiment, the frame (30) may be formed of a material having greater rigidity than the pad (40). For example, the frame (30) may be formed of metals such as stainless steel, but is not limited thereto.

As a result, even if the grip device (1) repeatedly picks up or places the secondary battery (B), deformation such as bending occurring in the frame (30) due to the gripping force may be minimized. That is, the grip device (1) may stably pick up or place the secondary battery (B).

In the present embodiment, the frame (30) may include a frame part (32). The frame part (32) may extend in the up-down direction (Z-axis direction). The upper portion of the frame part (32) may be operatively connected to the actuator. A coupling space (S) may be provided below the frame part (32). The coupling space (S) may have a configuration in which a coupling part (44) of the pad (40), which will be described later, is coupled in a shape-fitting manner. To this end, the coupling space (S) may have a shape corresponding to the coupling part (44).

Here, the coupling space (S) and the coupling part (44) having the corresponding shapes may indicate that the coupling space (S) and the coupling parts (44) have the same shape as a whole so that the coupling part (44) can be fitted and seated in the coupling space (S). In consideration of tolerance or coupling ease, the coupling space (S) may have a size slightly larger than the coupling part (44).

More specifically, the coupling space (S) may be provided as a space concavely recessed below the frame part (32). The coupling space (S) may be defined by the bottom surface(32a), the locking surface (32b) and the guide surface (32c) of the frame part (32). The bottom surface (32a), the locking surface (32b) and the guide surface (32c) may be collectively referred to as inner surfaces (or inner walls) of the coupling space (S).

In this embodiment, the bottom surface (32a) may be a surface covering the rear portion (negative X-axis direction) of the coupling space (S). The bottom surface (32a) may be a surface facing the front (positive X-axis direction). The bottom surface (32a) may be a flat surface in the left-right and up-down directions (Y-axis and Z-axis directions).

The bottom surface (32a) may face and be in contact with the rear surface of the coupling part (44). The coupling space (S) may be opened forward (positive X-axis direction). Thus, the coupling part (44) may enter through the front portion of the coupling space (S).

In this embodiment, the locking surface (32b) may be a surface covering the upper side (positive Z-axis direction) of the coupling space (S). The locking surface (32b) may be a surface facing the lower side (negative Z-axis direction). The locking surface (32b) may be a flat surface in the front-rear and the left-right directions (X-axis and Y-axis directions).

The locking surface (32b) may face and be in contact with the upper portion of the coupling part (44). The coupling space (S) may be opened downward (negative Z-axis direction). Thus, the coupling part (44) may enter through the lower portion of the coupling space (S).

Here, in the present embodiment, the locking surface (32b) may function as a reference surface for the shape-fitting coupling between the coupling part (44) and the coupling space (S). For example, when the frame (30) and the pad (40) are coupled to each other, the coupling part (44) may move upward (positive Z-axis direction) in the coupling space (S) so that the relative positions of the frame (30) and the pad (40) can be determined.

Here, a position, at which the coupling part (44) and the locking surface (32b) are in contact with each other, may be set as a relative rated position of the frame (30) and the pad (40). This may enhance assemblability and coupling between the frame (30) and the pad (40).

In the present embodiment, the guide surface (32c) may be provided in a pair. The pair of side surfaces (32c) may be surfaces covering the left side (negative Y-axis direction) and the right side (positive Y-axis direction) of the coupling space (S), respectively.

The guide surface (32c) may extend in the up-down direction (Z-axis direction). The guide surface (32c) may be a flat surface in the front-rear and the up-down directions (X-axis and Z-axis directions). The pair of guide surfaces (32c) may face each other in the left-right direction (Y-axis direction). The guide surface (32c) may face and be in contact with the side portion of the coupling part (44).

Here, the guide surface (32c) may guide the movement of the coupling part (44) when the frame (30) and the pad (40) are coupled to each other. More specifically, when the coupling part (44) entering the coupling space (S) moves toward the rated position, the side portion of the coupling part (44) may slide down on the guide surface (32c) and be guided in the up-down direction Z-axis direction). This may enhance assemblability and coupling between the pad (40) and the frame (30).

Meanwhile, in this embodiment, it has been described that the inner wall of the coupling space (S) is formed of a plurality of planes. However, the inner wall of the coupling space (S) may have a partially bent or stepped shape, as needed.

Referring back to FIG. 3 to FIG. 5, in this embodiment, the frame part (32) may be provided with a corresponding coupling hole (33). The corresponding coupling hole (33) may be a hole to which the coupling member (50), which will be described later, is coupled.

In this embodiment, the corresponding coupling hole (33) may be formed to pass through the frame part (32) in the front-rear direction (X-axis direction). One opening of the corresponding coupling hole (33) may be disposed on the bottom surface (32a). Here, in this embodiment, the corresponding coupling holes (33) may be formed in plurality. The plurality of the corresponding coupling holes (33) may be arranged in the up-down direction (Z-axis direction).

However, as long as the coupling member (50) passes through to be coupled to relatively fix the frame (30) and the pad (40), the position and the number of the corresponding coupling holes (33) are not particularly limited. For example, the corresponding coupling hole (33) may be formed to pass through the frame part (32) in the left-right direction (Y-axis direction), and one opening of the corresponding coupling hole (33) may be disposed on the guide surface (32c).

Meanwhile, in the present embodiment, it is described in that the upper side (positive Z- axis direction), left side (negative Y-axis direction), right side (positive Y-axis direction) and rear portion (negative X-axis direction) of the coupling space (S) are covered by the locking surface (32b), guide surface (32c) and bottom surface (32a), respectively, and the front (positive X-axis direction) and lower side (negative Z-axis direction) thereof are open. However, a direction (or a portion) in which the coupling space (S) is opened is not particularly limited as long as the coupling part (44) of the pad (40) can enter in a shape-fitting manner.

Referring to FIG. 2 to FIG. 5, the frame (30) of the grip device (1) according to an embodiment of the present disclosure may include the side cover part (34). The side cover part (34) may be configured to surround the side portion of the pad part (42), which will be described later. The side cover part (34) may be provided in a pair. The pair of side cover parts (34) may respectively surround both side portions of the pad part (42) Both side portions of the pad part (42) may be coupled between the pair of side cover parts (34) in a shape-fitting manner.

In this embodiment, the side cover part (34) may include a rear surface cover portion (36). The rear surface cover portion (36) may extend in the left-right direction (Y-axis direction) from the lower portion of the frame part (32). The rear surface cover portion (36) may be a portion covering the rear surface (42b) of the pad part (42). Here, the rear surface (42b) of the pad part (42) may be a surface facing the rear portion (negative X-axis direction).

In this embodiment, rear surface cover portion (36) may extend in the up-down direction (Z-axis direction). The rear surface cover portion (36) may have an up-down length greater than or equal.to the pad part (42). The rear surface cover portion (36) may serve to cover the whole of the rear surface (42b) of the pad part (42). Here, the rear surface cover portion (36) of the pair of side cover parts (34) may be symmetrically configured with the coupling space (S) therebetween.

In this embodiment, the side cover part (34) of the grip device may include the side cover portion (38). The side cover portion (38) may extend forward (positive X-axis direction) from the rear surface cover portion (36). The side cover portion (38) may be configured to cover the side surface (42c) of the pad part (42). Here, the side surface (42c) of the pad part (42) may be a side view surface facing the left-right direction (Y-axis direction).

In this embodiment, the side cover portion (38) may extend in the up-down direction (Z-axis direction). The side cover portion (38) may have an up-down length greater than or equal.to the pad part (42). This configuration may be such that the side cover portion (38) may serve to cover the whole of the side surface (42c) of the pad part (42).

Here, the side cover portion (38) of the pair of side cover parts (34) may be symmetrically configured with the coupling space (S) therebetween. The pair of side cover portions (38) may cover the left (negative Y-axis direction) side surface (42c) and the right (positive Y-axis direction) side surface (42c), respectively. In other words, the pad part (42) may be disposed between the pair of side cover portions (38).

Meanwhile, in this embodiment, it has been described that the pair of side cover parts (34) are symmetrically configured based on the coupling space (S). However, the pair of side cover parts (34) may have different structures or sizes in consideration of the shape of the pad part (42).

Referring to FIGS. 2 to 4, the gripper (20) of the grip device (1) according to an embodiment of the present disclosure may include the pad (40). The pad (40) may be configured to be directly in contact with the secondary battery (B).

In the present embodiment, the pad (40) may be formed of a material having lower rigidity than the frame (30). For example, the material of the pad (40) may be plastics such as polyetheretherketone: PEEK). The material of the pad (40) is not particularly limited. For example, the material of the pad (40) may include rubber or the like.

As described above, in this embodiment, the pad (40) of the gripper (20) may be formed of a material having relatively weak rigidity, and the frame (30) may be formed of another material having relatively strong rigidity, thereby preventing the deformation of the frame (30) caused by repeated operation, and minimizing damage such as scratches applied to the outer surface of the secondary battery (B).

Furthermore, in a process in which the pad (40) is in contact with the secondary battery (B) and applies the gripping force, one portion of the pad (40) may be deformed to be in contact with the secondary battery (B) in a wider area. Thus, the gripper (20) of the grip device (1) may stably pick up or place secondary batteries (B) of various structures and shapes.

In the present embodiment, the pad (40) may include the pad part (42). The pad part (42) may have a pad shape having a predetermined thickness in the front-rear direction (X-axis direction). The pad part (42) may be disposed between the pair of side cover parts (34).

In this embodiment, the pad part (42) may include the grip surface (42a) and the rear surface (42b). The grip surface (42a) may be a surface facing the front (positive X-axis direction). The grip surface (42a) may be in contact with the outer surface of the secondary battery (B).

Here, in the present embodiment, the grip surface (42a) may be concavely formed rearward (negative X-axis direction). The grip surface (42a) may be formed of concave curved surfaces, or may be formed of several planes connected to each other as illustrated. This configuration may be configured such that the grip surface (42a) is in contact with the outer circumferential part of the secondary battery (B) over an area as wide as possible.

In the present embodiment, the rear surface (42b) may be a surface facing the rear portion (negative X-axis direction). The rear surface (42b) may be covered by the frame part (32) and the rear surface cover portion (36) of the frame (30). The rear surface (42b) may be a flat surface in the up-down and left-right directions (Y-axis and Z-axis directions). If necessary, at least a portion of the rear surface (42b) may be bent or stepped.

In this embodiment, the pad part (42) may include the side surface (42c). The side surface (42c) may be a surface formed between the rear surface (42b) and the grip surface (42a) in the thickness direction (X-axis direction) of the pad part (42).

Here, the side surface (42c) may be provided in a pair. The pair of side surfaces (42c) may be provided on the left side (negative Y-axis direction) and the right side (positive Y-axis direction) of the pad part (42), respectively. The pair of side surfaces (42c) may face the left side (negative Y-axis direction) and the right side (positive Y-axis direction).

In this embodiment, the pair of side surfaces (42c) may be covered by the pair of side cover portions (38), respectively. As described above, in this embodiment, since the left and right side portions of the pad part (42) are surrounded by the side cover part (34), the pad part (42) may be protected from an external impact or contamination, and a phenomenon in which the pad part (42) vibrates or shakes left and right may also be prevented.

Meanwhile, the pad (40) of the grip device (1) according to an embodiment of the present disclosure may include the coupling part (44). The coupling part (44) may be configured to be coupled to the frame (30) in a shape-fitting manner. As a result, since the pad (40) may be easily detached and replaced from the frame (30), the grip device (1) may more actively respond to changes in the size or outer shape of the secondary battery (B) during the process.

In this embodiment, the coupling part (44) may be provided on the rear surface (42b) of the pad part (42). The coupling part (44) may protrude rearward (negative X-axis direction) from the pad part (42). The coupling part (44) may have a rectangular block shape corresponding to the coupling space (S). This may enable the coupling part (44) to be inserted to the coupling space (S) to provide a fit.

Here, in this embodiment, the coupling hole (45) may be provided in the coupling part (44). The coupling hole (45) may be coaxially arranged with the corresponding coupling hole (33) of the above-described frame (30). The coupling hole (45) may be provided in plurality in response to the number of the corresponding coupling holes (33). In addition, the plurality of coupling holes (45) may be arranged in parallel to the plurality of corresponding coupling holes (33).

The gripper (20) of the grip device (1) according to an embodiment of the present disclosure may include the coupling member (50). The coupling member (50) may pass through to be coupled through the coupling hole (45) and the corresponding coupling hole (33) arranged side by side. The coupling member (50) may assist in coupling the pad (40) to the frame (30).

Here, the coupling member (50) may be configured to be detachably coupled to the coupling hole (45) and the corresponding coupling hole (33). Here, the two components being detachably coupled may indicate that an operator may couple or disengage the two components by using bare hands or simple tools.

For example, the coupling member (50) may include screws, bolts, nuts, or the like. This may serve to allow the pad (40) to be easily detached or coupled from the frame (30). However, the type or structure of the coupling member (50) is not particularly limited as long as the pad (40) and (30) can be coupled to each other.

As described above, in the grip device (1) according to an embodiment of the present disclosure, the pad (40) and the frame (30) supporting this are formed of materials with different rigidities, thereby enabling secondary batteries (B) of various sizes and shapes to be stably picked up or placed without damage.

Furthermore, in the grip device (1) according to an embodiment of the present invention, the pad (40) and the frame (30) are coupled to each other in a shape-fitting manner, which enables the pad (40) to be easily replaced in response to changes in the shape or structure of the secondary battery (B). Accordingly, the grip device (1) may pick up or place secondary batteries (B) of various structures and shapes.

Meanwhile, in the present embodiment, it has been described that the shape-fitting coupling between the pad (40) and the frame (30) is performed by the coupling part (44) protruding from the pad part (42) and the coupling space (S) provided concavely in the frame part (32). However, space having a similar structure to the coupling space (S) of the frame (30) may be concavely recessed in the pad (40), and a coupling part having a similar structure to the coupling part (44) may be provided in the frame (30).

In addition, in this embodiment, the gripper (20) disposed relatively forward (positive X-axis direction) among the pair of grippers (20) may be symmetrically configured in the front-rear direction (X-axis direction) with respect to the gripper (20) described above. Certainly, the pair of grippers (20) may have different structures or sizes as necessary.

Although the present disclosure has been described above with reference to the specified embodiments and drawings, the present disclosure is not limited thereto, and various changes and modifications may be made by those skilled in the art to which the present disclosure pertains without departing from the spirit and scope of the present disclosure.

**[List of Reference Numerals]**

| | | | |
|---|---|---|---|
| 1: | Grip device | 10: | Actuator |
| 20: | Gripper | 30: | Frame |
| 32: | Frame part | 34: | Side cover part |
| 36: | Rear surface cover portion | 38: | Side cover portion |
| 40: | Pad | 42: | Pad part |
| 44: | Coupling part | 50: | Coupling member |
| B: | Cylindrical secondary battery | | |

## Claims

1. A grip device for picking up or placing a cylindrical secondary battery,
comprising a pad and a gripper including a frame supporting the pad; and
an actuator for moving the gripper in one direction,
wherein the pad comprises a pad part comprising a grip surface capable of being in contact with an outer circumferential part of the cylindrical secondary battery; and
a coupling part provided on one side of the pad part and coupled to the frame in a shape fitting manner.

2. The grip device according to claim 1,
wherein the gripper is provided in a pair, and
the pair of grippers are arranged to face each other in a direction parallel to the one direction.

3. The grip device according to claim 1,
wherein the frame may be formed of a material having greater rigidity than the pad.

4. The grip device according to claim 3,
wherein a material of the frame includes metals, and
a material of the pad includes plastics.

5. The grip device according to claim 1,
wherein the frame extends in a direction perpendicular to the one direction,
the pad is positioned adjacent to an end of the frame, and
the grip surface of the pad part faces the one direction.

6. The grip device according to claim 1,
wherein the gripper further includes a coupling member, a coupling hole is provided in the coupling part, a corresponding coupling hole connected to the coupling hole is provided in the frame, and
the coupling member is coupled to the coupling hole and the corresponding coupling hole.

7. The grip device according to claim 6,
wherein the coupling hole and the corresponding coupling hole are provided in plurality.

8. The grip device according to claim 7,
wherein the frame extends in a direction perpendicular to the one direction, and
the plurality of coupling holes and corresponding coupling holes are arranged along the perpendicular direction.

9. The grip device according to claim 1,
wherein the coupling part protrudes outward from the pad part, and
the frame includes a frame part provided with a coupling space into which the coupling part is inserted.

10. The grip device according to claim 9,
wherein the coupling space may have a shape corresponding to the coupling part so that the coupling part and the frame part can be coupled in a shape fit manner.

11. The grip device according to claim 9,
wherein the coupling space is opened in the one direction, and
the coupling part protrudes from the pad part in a direction opposite to the one direction.

12. The grip device according to claim 11,
wherein the frame part extends in a direction perpendicular to the one direction, and
one side of the coupling space is opened, and another side facing the one side is blocked by an inner wall of the frame part based on a longitudinal direction of the frame part.

13. The grip device according to claim 9,
wherein the frame comprises a side cover part configured to surround a side portion of the pad part.

14. The grip device according to claim 13,
wherein the side cover part is provided in a pair, and
the pair of side cover parts are arranged side by side with the coupling space therebetween.

15. The grip device according to claim 13,
wherein the side cover part is coupled to the side portion in a shape-fitting manner.

16. The grip device according to claim 15,
wherein the pad part comprises
a rear surface facing the grip surface; and
a side surface provided between the grip surface and the rear surface,
wherein the side cover part comprises
a rear surface cover portion covering at least a portion of the rear surface; and
a side cover portion extending from the rear surface cover portion and covering at least a portion of the side surface.

17. The grip device according to claim 16,
wherein the side cover part may have a length greater than or equal to the pad part based on the longitudinal direction.

18. The grip device according to claim 16,
wherein the coupling part is provided on the rear surface.
